# EUROPEAN PATENT SPECIFICATION

(11) **EP 3 718 174 B1**
(45) Date of publication and mention of the grant of the patent: **25.09.2024**
(21) Application number: 18884746.1
(22) Date of filing: 28.11.2018
(51) Int. Cl.: H01R 13/00, H01R 13/62, H01R 43/26, F16L 3/00, F16L 3/08, B65D 63/10, B29D 5/00

(54) **RELEASABLE CABLE TIE**
LÖSBARER KABELBINDER
ATTACHE DE CÂBLE LIBÉRABLE

(30) Priority: 02.12.2017 US 201762593908 P
(43) Date of publication of application: 07.10.2020
(73) Proprietor: Kml Holding Group LLC, Quakertown, PA 18951 (US)
(72) Inventor: MCDOWELL, George, R., III, Hellertown, PA 18055 (US)
(74) Representative: Rossmanith, Manfred
(86) International application number: PCT/US2018/062873
(87) International publication number: WO 2019/108671

(56) References cited:
- WO-A1-90/11945
- US-A- 4 236 280
- US-A- 4 236 280
- US-A- 4 287 644
- US-A- 5 758 390
- US-A1- 2012 054 988
- US-A1- 2012 054 988
- US-A1- 2016 113 660
- US-B1- 6 185 791

## Description

This application is a continuation-in-part of prior U.S. Provisional Patent Application Serial No. 62/593,908, filed December 2, 2017.

### BACKGROUND OF THE INVENTION

### 1. Technical Field

The present invention relates to tie apparatus and method for tying and holding objects together. In one aspect, the present invention relates to tie apparatus and method for tying together electrical cables. In one aspect, the present invention relates to an electrical cable tie apparatus and method for use in the aviation industry.

### 2. Background Art

Ties are used to tie and fasten electrical power cords or electrical cables or other objects to be bundled, for the purpose of holding the electrical power cords or electrical cables bundled neatly and securely together.

### DISCLOSURE OF INVENTION

### INTRODUCTION TO THE INVENTION

U.S. Patent No. 8,499,419 discloses a releasable tie having arm 17 to facilitate disengagement but nowhere discloses the size dimensions of arm 17.

U.S. Patent No. 4,236,280 discloses a releasable tie having latch 26 and a bend line or a pivot line of latch 26 but nowhere discloses the size dimensions of the latch 26.

U.S. Patent No. 3,991,444 discloses a releasable cable tie having rigid lever 42 which is engaged by the user's finger nail (Col. 3, lines 37-40 and lines 59-62.)

U.S. Patent No. 3,908,233 discloses a releasable cable tie having extension 260 but nowhere discloses the size dimensions of the extension 260.

U.S. Patent No. 4,805,856 discloses a releasable cable tie having release lever 29 but nowhere discloses the size dimensions of the release lever 29.

U.S. Patent No. 6,185,791 discloses a releasable cable tie having latch 22 but nowhere discloses the size dimensions of the latch 22.

U.S. Patent No. 7,866,005 discloses a releasable tie having release tab 42 but nowhere discloses the size dimensions of the release tab 42.

U.S. Patent No. 5,901,416 discloses a releasable tie having clip 28 but nowhere discloses the size dimensions of the clip 28.

U.S. Patent No. 5,890,265 discloses a parallel entry tie having tip 42 of locking tab 36. The tip portion 42 is lifted upwardly to disengage locking head teeth 44.

U.S. Patent No. 5,193,250 discloses a releasable cable tie having extension 34 which projects upwardly at the distal end from a pawl 28.

U.S. Patent No. 5,687,455 discloses a releasable circular fastener having control end 20 of arm 19 but nowhere discloses the size dimensions of the arm 19.

U.S. Patent No. 5,577,698 discloses a mount for festive ornaments having a locking member 15, 16, 17 for holding holiday decorations.

U.S. Patent No. 4,813,105 discloses a cable clamp having an upper portion 88 of pawl 16 in the cable or wire bundles clamp for an aircraft hostile environment in an area of limited access.

U.S. Patent No. 3,747,164 discloses a rotating release strap having member 62.

U.S. Patent No. 8,955,198 discloses a thumb plate 82 for manual release of an interlock with a strap body.

WO 90/11945 discloses a binding strap molded as a one-piece thermoplastic planar strap. A grip plate is formed integrally with the strap at one end of the strap. The grip plate has an opening to receive an opposite end of the strap. The strap is provided with strap teeth which are oriented in a transversal direction of the strap. A locking pawl arranged at an end of an activation lever engages with strap teeth to lock the strap when inserted into the opening in the grip plate. The locking pawl can be released by pressing the activation lever towards the grip plate.

Commercially available ties today, when tightened, cannot be released without damage to electrical power cords or electrical cables when bundled and tied tightly. When it is desired to add or remove more electrical power cords or electrical cables or objects in a tied bundle or to rearrange the objects already tied up, conventional ties must be cut and be replaced by new ones, which is not only inconvenient and costly, but more importantly, it leads to damage to the electrical power cords or electrical cables. Whenever any electrical power cord or electrical cable in a bundled tie is damaged, the entire electrical wiring must be replaced and redone. In the production of large airliners today, miles and miles of electrical cables would need to be replaced and redone.

### SUMMARY OF THE INVENTION

The releasable cable tie apparatus and method of the present invention provide means and method to overcome the drawbacks and problems of the prior art. The present invention provides a releasable cable tie according to claim 1.

The object of the present invention is to provide a releasable tie apparatus and method of the present invention wherein with the arm of the releasing tab extending from the operating rod, a user can easily apply a force to the arm to disengage the at least one first engaging tooth of the operating rod from the second engaging teeth of the strap body, thus allowing the second opposite end of the strap body to be pulled out of the window of the locking head. As such, the releasable tie features easy operation, repeated use, and a low cost of use, and more importantly no damage to the electrical power cords or electrical cables, when the cable tie is released and removed.

These and other objects of the apparatus and method of the present invention will be found from a close inspection of the formal views of the technical drawings and detailed description which follow.

### BRIEF DESCRIPTION OF THE DRAWINGS

The structure of the present invention as well as a preferred mode of use, further objects, and advantages of the present invention will be understood by referring to the detailed description of an illustrative embodiment of the releasable cable tie of the present invention in conjunction with the accompanying formal views of the technical drawings, in which:
FIGURE 1 is a top plan view of the releasable cable tie according to a preferred embodiment of the present invention.
FIGURE 2 is an elevation view of the releasable cable tie according to a preferred embodiment of the present invention.
FIGURE 3 is a close-up top plan view of the releasable cable tie according to a preferred embodiment of the present invention.
FIGURE 4 is a close-up elevation view of the releasable cable tie according to a preferred embodiment of the present invention.
FIGURE 5 is an elevation view of the releasable cable tie according to a preferred embodiment of the present invention showing the releasable strap held in position in the locking head.

### BEST MODE FOR CARRYING OUT THE INVENTION

### DETAILED DESCRIPTION OF THE INVENTION

The present invention provides novel apparatus and method including a releasable cable tie wherein the engaging teeth of an elongated strap are employed and operated in novel manner of releasable engagement between the engaging teeth of a locking head for achieving a fixing effect. The drawings referred to in the following detailed description identify, describe, and demonstrate the important features of the novel releasable cable tie of the present invention.

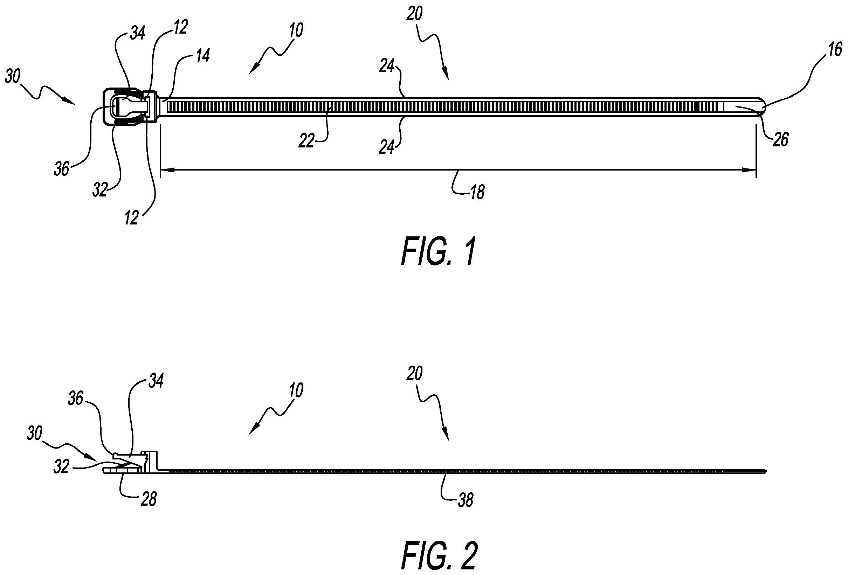

Referring now to FIGURE 1, a releasable tie 10 according to a preferred embodiment of the present invention includes an elongated planar strap 20 and a locking head 30. The locking head 30 is formed to have a window 12, wherein the window 12 provides a channel, passageway, or window extending entirely through the locking head 30. The elongated strap 20 has a first end 14 and a second opposite end 16. The first end 14 of strap 20 is connected to the looking head 30. The second opposite end 16 of strap 20 can be inserted through the window 12 of the locking head 30 and be engaged with the locking head 30 so as to be fixed in position thereto and tie together objects to be bundled.

Releasing strap 20 is shown having elongated length 18. Releasing locking teeth 22 on top of strap 20 provide means for locking the adjustable strap into locking head 30. Release guide rails 24 provide means for gliding strap 20 into window 12 of locking head 30. Release strap tongue 26 guides the insertion of glide rails 24 into window 12.

Referring now to top plan view FIGURE 1 and corresponding elevation view FIGURE 2, bottom plate 28 on releasing head 30 incorporates index finger pad supports 32. Release thumb pad 34 is provided with release ripple strip/thumb grip 36. Strap bottom 38 is shown on strap 20.

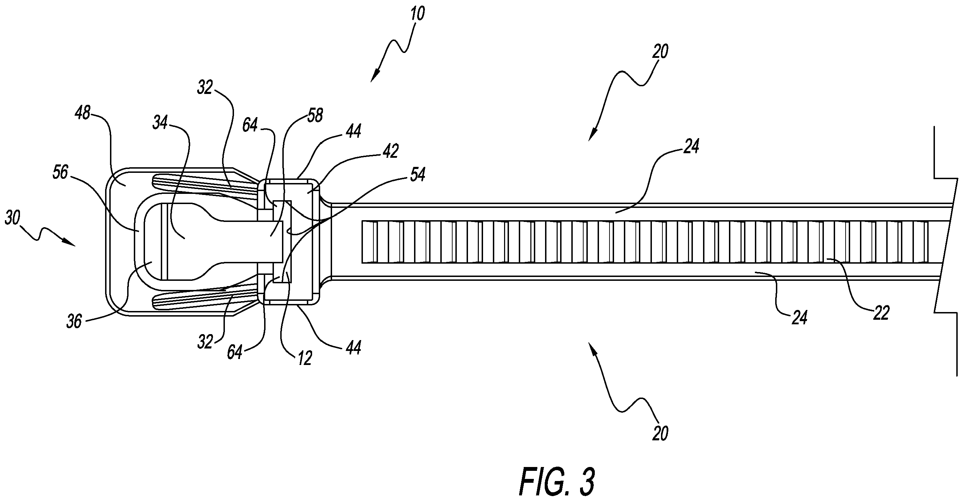

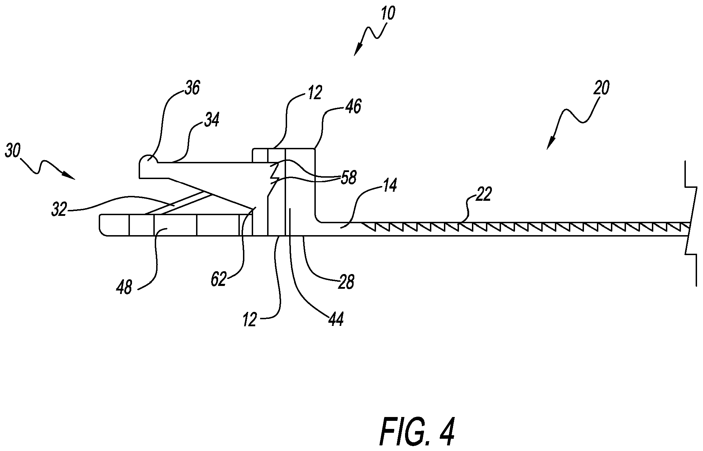

Referring now to FIGURE 3 and FIGURE 4, releasing locking head 42 includes releasing head side walls 44 and top releasing head 46. Locking head 30 incorporates index finger pad 48, releasing head mouth window/strap opening 12, strap inter mouth framing walls 54, releasing tab flow through 56, releasing head locking teeth 58, and releasing tab fulcrum 62. The index finger pad 48 provides a back plate positioned behind and below the thumb pad 34.

The Secure Cable Ties New EZ Releasable cable tie design of the present invention has been found to provide a quick, easy release, as well as a comfortable release trigger reaction. The EZ Releasable tie uses a novel wide release ripple strip/ thumb grip 36 on thumb pad or paddle 34, as shown in the formal figures of the technical drawings, which thumb pad or paddle 34 creates a larger and wider surface area for the user.

The EZ releasable tie performs with a quick release and smooth operation because of the large surface area of thumb pad 34 and because the force or tensing required to release the locking teeth 58 is spread over the entire width of the user's thumb. The thumb pad 34 at ripple strip 36 is as wide as one third to one half (1/3 to 1/2) of the average thumb width of an operator which creates a more comfortable squeeze and release operation. An average thumb width is calculated at about 2.5 cm. The thumb pad 34 is formed to have a specified width.

The thumb pad 34 of the present invention is formed to have a width at least 90% of the strap 20 width. In a preferred embodiment, the thumb pad 34 is formed to have a width at least 95% of the strap 20 width.

In one embodiment, a thumb pad 34 has a width of 7.5 mm for a strap 20 width of 7.6 mm. In one embodiment, a thumb pad 34 has a width of 5.5 mm for a strap 20 width of 5.6 mm. In one embodiment, a thumb pad 34 has a width of 4.5 mm for a strap 20 width of 4.6 mm.

The index finger back plate 48 has dimensions of width and length at least as large as the width and length of thumb pad 34. That is to say, the width and length of the finger back plate 48 is at least as large as the width and length of thumb pad 34.

A thumb pad 34 release movement dimension of 0.5 mm actuates the withdrawal of the releasing head locking teeth 58 from the strap teeth 22 to release the cable tie of the present invention.

The index finger back plate 48 provides a back plate dimension at least 100% of the thumb pad width and length.

An average adult thumb width is approximately 2.5 cm in width. The thumb pad 34 is at least 3 mm in width and at least 6.5 mm in length to accommodate the average thumb width which creates a more comfortable squeeze and release operation.

The length of the thumb pad 34 is a function of the size of the tie 10. A tie 10 having a 7.6 mm strap 20 size has a thumb pad 34 length function in the range of at least 5 mm in length up to 19 mm in length with the preferred thumb pad function size being 14 mm in length for both comfort and ease of use.

The height of the thumb pad 34 above the index finger back plate 48 is a function of the size of tie 10. A tie 10 having a 7.6 mm strap 20 size has a thumb pad 34 height range at least 2 mm in height up to 7 mm in height with the preferred function height size being 3.5 mm in height above index finger back plate 48 for both comfort and ease of use.

As the tie 10 sizes get larger, so does the length of the thumb pad 34 and the range of function, and as the tie 10 size gets smaller, so does the length of the of the thumb pad and the range of function.

As the tie 10 sizes get larger, so does the height of the thumb pad 34 above the index finger back plate 48 get larger for the range of function, and as the tie 10 size gets smaller, so does the height of the of the thumb pad 34 above the index finger back plate 48 get smaller for the range of function and to accommodate the average thumb width which creates a more comfortable squeeze and release operation.

Prior art releasable cable ties normally have a much smaller release tab, causing pressure to the finger or fingernail and requiring much more force to release the locking teeth of the locking head from the locking teeth on the strap. The prior art makes for a more difficult and sometimes impossible tensing that will not allow the user to release the cable tie properly from the locked position, particularly in tight spaces or while cinched tightly.

With reference to FIGURE 3 and FIGURE 4, there is illustrated the construction of releasing locking head 42 of the locking head 30 including an integrally formed bottom releasing head 28 to which the top releasing head 46 is joined. The intermouth framing walls 54 extend between releasing head side walls 44 of the releasing locking head 42. The releasing tab fulcrum 62 beneath the release thumb pad 34 reinforces the release thumb pad 34. The releasing tab fulcrum 62 joins the upright portion of the release thumb pad 34 and not only strengthens the release thumb pad 34 but also defines the bend line or pivot line of the release thumb pad 34. The sides of the releasing head side walls 44 also include rearwardly extending portions a lesser height than the releasing head side walls 44 and serve to shield the release thumb pad 34 from sidewise interference, as well as to provide additional strength to the releasing head sidewalls 44.

Integrally formed on the thumb pad 34 for movement thereon and extending into the releasing head mouth 12 are the locking teeth 58. In the embodiment illustrated, two locking teeth on the inner surface of the thumb pad 34 define a part of releasing thumb pad 34 in the releasing locking head 42. The locking teeth 58 of the locking head are complementary to the teeth 22 on the strap 20 and extend a sufficient distance into releasing head mouth 12 to cooperate with selected strap locking teeth 22 so as to lock the strap in selected position around a plurality of electrical power cords and electrical cables to be secured to one another.

Referring now to FIGURE 3 and FIGURE 4, an enlarged top view shows the releasing strap 20. The gripping teeth or protuberances 22 extend a relatively short distance from the top surface of the releasing strap 20 and thereby enhance tightening of the releasing strap 20 inserted through the transverse releasing head mouth 12 in releasing locking head 42.

The releasing strap 20 of the present invention can be secured in position about a plurality of elongated electrical wires (not shown). The second opposite end 16 of strap 20 is inserted into the transverse opening of releasing head mouth 12 until the strap 20 is snugly drawn about a plurality of electrical wires or like parts to be joined together in fixed and secure relationship. With the release strap 20 tightly drawn about the wires, the complementary releasing locking teeth 22 are locked in relationship with locking head teeth 58. The edges of the teeth 22 normal to the base portion abut the edges of teeth 58 normal to the inner surface of release thumb pad 34. Retrogression or movement in a release direction is prevented because the abutting planar faces of the locking teeth 22 are in engagement with like cooperating surfaces on the selected cooperating teeth 58. Because of the transverse relationship of the releasing head mouth 12 relative to the plane of the strap 10, the structure of the complementary teeth 22 and 58 engage one another more firmly rather than to release from one another when the base portion is urged in a release direction.

Release of locking teeth 58 from the teeth 22 on strap 20 is attained and achieved by positive downward force being applied on the release thumb pad 34, so as to pivot the release thumb pad 34 relative to the releasing tab fulcrum 62 of releasing locking head 42 and thereby release the lock teeth 58 from engagement with the teeth 22 on the strap 20. A thumb pad 34 release movement dimension of 0.5 mm actuates the withdrawal of the releasing head locking teeth 58 from the strap teeth 22 to release the cable tie of the present invention. The strap 20 then can be moved in a release direction in the transverse releasing head mouth 12 so as to permit adjustment or removal of the electrical power cords or the electrical cables (not shown) from the tie 10.

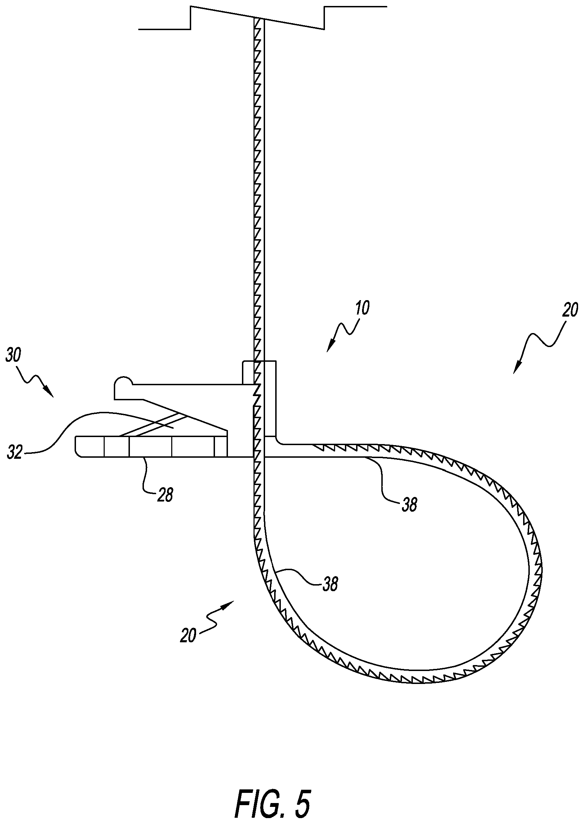

Referring now to FIGURE 5, an elevation view of the releasable cable tie 10 according to a preferred embodiment of the present invention shows the releasable strap 20 held in position in the locking head 30. The strap 20 is readily releasable by means of the integral releasable latch function of releasing locking head 30 and can be easily reapplied and adjusted as desired.

The releasing cable tie 10 preferably is molded in one piece integrally from thermoplastic, such as nylon or polypropylene and possesses sufficient strength and resiliency to permit the desired working thereof as well as the desired latching and release.

The releasing cable tie 10 may be color coded to enhance its use in certain industrial applications.

While the detailed description and identifying references to the formal views of the technical drawings have shown a presently preferred embodiment of the novel releasable cable tie of the present invention, it will be understood to be subject to modification and that the invention is intended to be limited only within the scope of the appended claims.

### Secure Cable Ties

### EZ Releasable Cable Tie Drawing Key

- 10: Releasing Cable Tie
- 12: Locking head window, Releasing head mouth (strap opening)
- 14: Strap body first end
- 16: Strap body second end
- 18: EZ Releasing strap length
- 20: Releasable Cable Tie Strap
- 22: EZ Releasing locking teeth (adjustable strap)
- 24: EZ Release glide rails
- 26: EZ Release strap tongue
- 28: Bottom releasing head
- 30: Releasing locking head
- 32: Index finger pad supports
- 34: EZ Release thumb pad
- 36: Release ripple strip for thumb grip
- 42: EZ Release locking head
- 44: EZ Releasing head side walls
- 46: Top releasing head
- 48: Index finger pad
- 54: Strap Inter mouth framing walls
- 56: EZ Releasing tab flow through
- 58: Locking teeth
- 62: EZ Releasing tab fulcrum
- 64: EZ Releasing glide track

The releasable cable tie of the present invention has a releasing tab on the operating rod wherein the releasing tab stands erect off of the top of the tie when cinched. The tie also has a back plate positioned below and behind the releasing tab making it easier to pinch the releasing tab for release.

The releasable cable tie of the present invention provides a large and wide thumb pad or paddle release and an index finger pad back plate positioned below and behind the releasing thumb tab. The large and wide thumb pad is formed to have a preferred length and width on the releasable latch readily accessible by the user. The large pad or paddle release and index finger pad back plate make the releasing tab itself easier to pinch to release without having to use unnecessary force. The index finger pad back plate is positioned behind and below the thumb pad of the present invention.

The releasable cable ties of the present invention provide the significantly important benefit when the wide releasing tab pad stands erect off of the strap rather than lying directly on the strap when cinched. When the wide releasing tab pad stands erect a predetermined distance from the strap rather than lying directly on the strap when cinched, the user has plenty of room to be able to put a finger on both sides of the releasing tab pad giving ample leverage to pinch and release the tie easily. The old technology of the prior art does not allow for any room to get fingers behind the releasing tab when the tie is cinched tightly. In using the prior art cable ties, it has been found to be difficult to nearly impossible to be able to get enough leverage on the tab to be able to release the tie.

The releasable cable tie of the present invention is importantly novel in the way that the tie is configured to be released easily from a cable bundle compared to other releasable cable ties currently known. The releasing tab pad of the present invention is on top of the head rather than in the middle of the strap. Releasable cable ties having the releasing tab in the middle of the strap become very difficult to release when the cable tie is placed around a bunch of electrical cables when the electrical cables are cinched too tightly.

Prior art cable ties make depressing the releasing tab on the locking head very difficult and almost impossible in tight spaces because of the operator not being able to get any leverage on the releasing tab itself.

With the novel releasing tab pad of the present invention, the user/operator is able to access the releasing tab pad even while being cinched tightly around an electrical cable bundle.

The cable tie of the present invention can be released easily without resorting to cutting the cable tie off with dikes or wire cutters because of the cable tie being cinched too tightly around electrical cable bundles. When a releasable cable tie does not release properly, the user/operator must resort to cutting to remove the cable tie. The electrical cables that are strapped together then are at high risk for damage from the cutting tool blades. Damage to the electrical wire bundles will cause the electrical wires in the bundle to be damaged and rendered useless, and the entire electrical cable assembly must be rebuilt entirely to ensure that the electrical cables are damage free.

The top release cable tie of the present invention makes for easy access to the releasing tab pad as an over-loaded strap still can be released with a simple squeeze to the releasing tab.

The novel releasing tab pad of the present invention is much larger and wider and much easier to be depressed compared to prior tabs in the past.

The releasable cable tie of the present invention provides for easier access to hard to reach spots where a user/operator does not have room for two hands.

The large releasing tab having a large and wide release thumb pad and a finger plate back plate of the present invention allows for a quick squeeze from two fingers for a fast and easy release.

In conventional cable ties of the prior art, a reversed head releasable cable tie such as that disclosed and described in prior U.S. patents had a much smaller head design and a much slimmer strap design than the large and wide thumb pad of the present invention. The small head of prior cable ties made it much more difficult to squeeze and release and pull off the cable tie from a bundle that was in a tight spot because of the smaller gripping area. The head and tab of prior cable ties being much smaller made it much more difficult to nearly impossible in a tight space to find and squeeze while still trying to hold the head and pull off the cable tie.

With a larger and wider releasing thumb tab pad of the present invention and larger index finger back plate having raised bumps, it is very easy to grip and grab with two fingers while squeezing and pulling the cable tie and releasing the cable tie from the electrical cable bundle even while the cable tie is cinched tightly.

The important difference between the releasable cable tie thumb pad of the present invention and prior art releasable cable ties is the finger grip plate and the larger release tab thumb pad that is much easier to hold, squeeze, and release.

The releasable cable tie apparatus and method of the present invention provide the only EZ Releasable Cable Tie that can be cinched tightly to hold bundled items securely, while also being able to be removed fast and easily with one hand or two finger motion.

Prior releasable cable ties do not allow for the cable tie to be cinched down tightly around cables and be easily removed. Prior ties do not provide the proper leverage to the tab to release the older styles of releasable cable ties. The prior releasable ties do not allow the user/operator to get one finger behind the tie while squeezing the release tab when the releasable tie was wrapped too tightly around cables.

The new Secure EZ Releasable Cable Tie design of the releasable cable tie of the present invention has been developed when a major airliner manufacturer requested a product that could fit in their small circular supports that they use to secure electrical cables to the sides of the airliner's airplanes. The airliner manufacturer needed a product that could be used in a temporary fashion while installing and wiring the planes until the permanent fly-away cable tie could be installed during the final assembly. The common request from all of the electricians and other production personnel involved at the airliner manufacturer was to have a releasable tie that could hold fifty (50) pounds or more and could be removed easily without having to cut it way from the cable assembly. The releasable cable tie needed to be able to be cinched tightly around the electrical cable assemblies but still needed to release easily.

The process to create and solve the airliner manufacturer's problem was not available from prior art cable ties and was not as simple as it may appear at first impression. To get to the configuration and structure of the releasable cable tie of the present invention with the New Secure Cable Tie Releasable tie, it took many empirical developments before finding the current configuration and structure. In respect to understanding the problem with leverage, it was needed to find ways to get two fingers behind the releasable tab. Initial development started with a gun design that was like squeezing a trigger. The gun design was overly large and still seemed to be a problem for manufacturing and for the user/operator to get one finger behind the release tab. The development subsequently then used trial and error to produce the New Secure Cable Tie Releasable tie of the present invention, and it was found that the user/operator still could not get sufficient leverage on the release tab. After many trials and errors, it has been found empirically and configured finally that a pad or paddle lever of the present invention provides much more comfortable operation for the operator/user, as well as providing the proper leverage required to release the novel releasable cable tie of the present invention that was cinched tightly around an electrical cable bundle.

When the Secure Cable Ties New EZ releasable tie was developed for a large airline manufacturer, the airline manufacturer came with a specified need to be able to remove cable ties from an airplane's fuselage during the construction of an aircraft. The airline manufacturer needed a product that was easy to use and operate and would release from the electrical wiring harness when the permanent or fly-away cable ties were installed on the completed wiring harness. The airline manufacturer had tried all the releasable cable ties available on the open market without success until the novel releasable cable tie of the present invention was developed and worked experimentally to solve the problem with significant success.

The releasable cable tie apparatus and method of the present invention has the important novel configuration in that the release tab thumb pad stands erect off of the tie when cinched. The novel tie also has an index finger back plate positioned behind and below the tab thumb pad making it easier to pinch the tab for release.

Most prior art releasable ties, when cinched tightly, leave no room to be able to get fingers in between the strap and the tab. Most prior art releasable ties make it impossible to get leverage on the tab to be able to pinch the tab and release the strap, which causes the operator/user then to cut the strap instead. Other releasable cable ties have a latch that is inadequately designed so that the operator/user has to use a strong fingernail or a screw driver to be able to release them.

Some prior art releasable ties have a tab located on the strap that can be pinched and released. Those prior art releasable ties, when cinched, no longer get leverage on the tab to be able to pinch and release it.

The novel large and wide release tab thumb pad of the present invention stands erect off of the top of the strap and allows the operator/user to be able to get a finger on both sides of the tab pad to be able to easily pinch and release the tie.

The tab thumb pad sitting erect off of the top of the strap works so well that the operator can access the tab thumb pad easily and release the tie without straining the operator's fingers.

An important feature and benefit that differentiates the releasable cable tie of the present invention from any others is the fact that the releasing tab thumb pad stands erect off of the top of the strap rather than lying directly on the strap when cinched. The novel releasable cable tie of the present invention gives the user plenty of room to be able to put a finger on both sides of the tab pad giving ample leverage to be able to easily pinch and release the tie. The old technology did not allow for any room to be able to get fingers behind the tab when the tie is cinched tightly, making it impossible to be able to get enough leverage on the tab to be able to release the tie.

The present invention provides a large and wide pad or paddle release and index finger back plate that makes the releasing tab thumb pad itself much easier to pinch to release without having to use a lot of force.

The releasable cable ties are produced using thermoplastic resin through an injection mold. In one aspect, the releasable cable ties are constructed using polypropylene or nylon. In one aspect, the releasable cable ties are constructed using Nylon 66.

The important advantage that the releasable one-piece thermoplastic cable tie of the present invention provides is the fact that the large and wide tab thumb pad stands erect off of the top of the strap rather than lying directly on the strap when cinched, thereby giving the user plenty of room to be able to put a finger on both sides of the tab thumb pad giving ample leverage to be able to easily pinch and release the tie. The old technology did not allow for any room to be able to get fingers behind the tab when the tie is cinched tightly, making it very difficult to nearly impossible to be able to get enough leverage on the releasing tab to be able to release the tie. The novel releasable cable ties provide the novel large pad or paddle release and index finger back plate, making the tab itself easier to pinch to release without having to use a lot of force.

It has been found that the novel releasable cable tie of the present invention was able to be tightly cinched and then easily released within seconds using only two fingers without snagging or jamming in the process.

The important advantages, features, and benefits of the novel releasable cable tie of the present invention that were observed were the ease of use, ability to secure tightly, high strength of the grip of the tab thumb pad itself, quickness of release, and overall durability.

The improvement of the novel releasable cable tie of the present invention further has been found experimentally to provide to the airliner production manufacturer a releasing thumb pad pinch force needed to make it releasable in previously very difficult areas on the airplane and further so there was no chance that the ties could be released accidentally, and further was found to provide a more pliable size particularly suitable for tight areas experienced in airliner production manufacturing today.

The releasable tie of the present invention has been found experimentally to be operated with one hand or two fingers in very tight locations in the front of the airplane where all the cables are tied into the control panels. The front of the airplane has very tight bundles of cables and most of these bundles are positioned on top of each other. It is very hard for the electricians to remove the releasable cables ties. Most of the time, electricians are forced to cut the conventional ties because of an inability to get more than a hand into these places to squeeze the cable ties, since the cable ties on the market today require two hands to release the ties.

The electricians normally need to release 50 or 100 plus releasable ties daily when the wire harnesses are complete. With this number of releasable ties to release, squeezing a regular releasable tie causes pain and discomfort to the operator. The releasable tie of the present invention has been found to overcome the discomfort problem. By making the releasable tab larger and wider, the novel large thumb pad in the releasable tie of the present invention displaces the surface area of the thumb and makes for a much more comfortable release.

It has been found empirically that an unexpected benefit of the larger and wider release tab is an easy release of the locking teeth. With more leverage at the thumb pad, less force is required on the thumb or finger for the electricians to release and pull the new releasable ties of the present invention from any tight location with ease.

The releasable cable tie of the present invention requires users to use only two fingers on the same hand to squeeze and release the releasable tie while it was under pressure. The releasable cable tie of the present invention in preferred embodiment having a 7.6 mm strap size and having the locking head and novel fulcrum, provides a much stronger releasable tie having a releasing tab function which has been found to perform extremely well with an overall tensile strength of more than one hundred (100) lbs, together with providing a release tab made much more stable which reduces the chances of an accidental release.

With the strength and comfort and ease of release of the new releasable tie of the present invention, all the wish list requirements identified by large airliner production are met by the new releasable tie. The problems of removing releasable ties from tight locations are solved with one hand or two finger releases and release pulls without resorting to cutting the ties to remove and damage the wiring harnesses.

### INDUSTRIAL APPLICABILITY

The present invention relates to tie apparatus and method for tying and holding objects together. In one aspect, the present invention relates to tie apparatus and method for tying together electrical cables. In one aspect, the present invention relates to an electrical cable tie apparatus and method for use in the aviation industry.

## Claims

1. A releasable cable tie, comprising:
a molded one-piece thermoplastic elongated planar strap (20) wherein said strap (20) includes a plurality of strap teeth (22) formed on one side of said strap; and
a locking head (30) formed at one end of said strap (20) and formed integrally with said strap (20), wherein said locking head (30) is reusable and includes
an opening (12) therethrough on a first end of said locking head (30) adjacent the one end (14) of the strap, wherein said opening (12) is for receiving an opposite end (16) of said strap (20), said opposite end (16) being insertable into said opening (12) in a locking direction and forming a loop to receive cables to be bound, said strap teeth (22) being positioned external to the loop and away from the cables to be bound;
a releasable latch pivotally supported on the strap and having at least one latch lock tooth (58) complementary to said strap teeth (22) and extending into said opening and adapted to engage with at least one strap tooth (22) for preventing movement of said strap (20) in a release direction;
a pad (34) extending from said releasable latch toward a second end of said locking head (30), wherein said pad (34) is readily accessible by a user and configured to be depressed by a thumb of the user, said pad (34) being deflected about a pivot line on said releasable latch when depressed to release the at least one lock tooth (58) from engagement with the at least one strap tooth (22) to permit the strap (20) to be moved in the release direction; and
a back plate (48) extending from the opening (12) toward the second end of said locking head, wherein the back plate (48) is positioned below said pad (34), wherein said back plate (48) is readily accessible by the user and configured to provide support for an index finger of the user, wherein said pad (34) and said back plate (48) extend substantially perpendicular to said strap (20) in a direction away from the loop when said strap is in said opening (12), **characterized in that** said pad (34) includes a ripple strip (36) at far end thereof.

2. The releasable cable tie as set forth in claim 1, wherein said at least one latch lock tooth (58) is on a side of the opening (12) that said strap teeth (22) face when traversing the opening (12), wherein said at least one latch lock tooth (58) is directly actuated by movement of said pad (34) so as to move said at least one latch lock tooth (58) from locking engagement with said at least one strap tooth (22) a sufficient distance to enable movement of said strap (20) in the release direction.

3. The releasable cable tie as set forth in claim 1, wherein said pad (34) has a width at least 90% of width of the strap (20).

4. The releasable cable tie as set forth in claim 3, wherein said back plate (48) has a width and a length at least as wide and long as said pad (34).

5. The releasable cable tie as set forth in claim 1, wherein the at least one latch lock tooth (58) is positioned at one end of the releasable latch and the pad (34) is positioned at an opposite end of the releasable latch, wherein the releasable latch further includes a fulcrum (62) supporting the releasable latch, whereby pressure on an end of the pad (34) will pivot the releasable latch about the fulcrum (62) and free the at least one latch lock tooth (58) from engagement with the at least one strap tooth (22).

6. The releasable cable tie as set forth in claim 5, wherein the fulcrum (62) is positioned below the at least one latch lock tooth (58).

7. The releasable cable tie as set forth in claim 6, wherein the locking head (30) further includes side walls (44) reinforcing the releasable latch and constructed and arranged to define the fulcrum (62) and pivot line for the releasable latch.

8. A method of tying and securing electrical cables, comprising:
providing a molded one-piece plastic elongate planar strap (20) having a plurality of strap teeth (22) formed on one side of said strap and a reusable locking head (30) formed on one end (14) of said strap;
inserting an opposite end (16) of said strap (20) into an opening (12) in said locking head (30) in a locking direction and forming a loop to receive cables to be bound, wherein the plurality of strap teeth (22) are positioned external to the loop and away from the cables to be bound and said locking head (30) extends substantially perpendicular to said strap (20) in a direction away from the loop;
locking said strap (20) in said locking head (30) by engaging at least one lock tooth (58) formed in a releasable latch of said locking head (30) complementary to said strap teeth (22) and extending into said opening (12) with at least one strap tooth (22) for preventing movement of said strap (20) in a release direction;
releasing said locked strap by activating the releasable latch on said locking head (30) by depressing with a first finger a pad (34) extending from said releasable latch away from the opening (12) that is readily accessible by the user and includes a ripple strip at a far end thereof, said releasable latch extending away from said strap (20) when said strap (20) is in said opening (12), said releasable latch being pivotally supported on said strap and deflected about a pivot line on the locking head (30) to release the lock tooth (58) from engagement with the at least one strap tooth (22) to permit the strap (20) to be moved in a release direction; and
removing said strap (20) from said locking head (30) by placing a second finger on a back plate (48) positioned below the pad (34) while the pad (34) is being depressed by the first finger so as to secure the releasable latch between the first and the second finger and pulling the releasable latch in a direction away from the loop.

9. The method of tying and securing electrical cables as set forth in claim 8, wherein said at least one latch lock tooth (58) is on a side of the opening (12) that said strap teeth (22) face when traversing the opening (12), wherein said at least one latch lock tooth (58) is directly actuated by movement of said pad (34) so as to move said at least one latch lock tooth (58) from locking engagement with said at least one strap tooth (22) a sufficient distance to enable movement of said strap (20) in the release direction.

10. The method of tying and securing electrical cables as set forth in claim 8, wherein said pad (34) has a width at least 90% of width of the strap.

11. The method of tying and securing electrical cables as set forth in claim 10, wherein said back plate (48) has a width and a length at least as long and wide as said pad (34).

12. The method of tying and securing electrical cables as set forth in claim 8, wherein said pad (34) has a width at least 95% of a width of the strap (20).

13. The method of tying and securing electrical cables as set forth in claim 8, wherein the at least one latch lock tooth (58) is positioned at one end of the releasable latch and the pad (34) is positioned at an opposite end of the releasable latch, wherein the releasable latch further includes a fulcrum (62) supporting the releasable latch and positioned below the at least one latch lock tooth (58), whereby pressure on an end of the pad (34) will pivot the releasable latch about the fulcrum (62) and free the at least one latch lock tooth (58) from engagement with the at least one strap tooth (22).

14. The method of tying and securing electrical cables as set forth in claim 13, wherein the locking head (30) further includes side walls (44) constructed and arranged so as to define and reinforce the fulcrum (62) and said pivot line for the releasable latch.

## Patentansprüche

1. Lösbarer Kabelbinder, der umfasst:
ein geformtes einteiliges thermoplastisches langgestrecktes planares Band (20), wobei das Band (20) mehrere Bandzähne (22) enthält, die auf einer Seite des Bands gebildet sind; und
einen Rastkopf (30), der an einem Ende des Bands (20) gebildet ist und der mit dem Band (20) einteilig gebildet ist, wobei der Rastkopf (30) wiederverwendbar ist und enthält:
eine Öffnung (12) dadurch an einem ersten Ende des Rastkopfs (30), das zu dem einen Ende (14) des Bands benachbart ist, wobei die Öffnung (12) zum Aufnehmen eines gegenüberliegenden Endes (16) des Bands (20) dient, wobei das gegenüberliegende Ende (16) in einer Einrastrichtung in die Öffnung (12) eingeführt werden kann und eine Schlaufe zum Aufnehmen zu bindender Kabel bildet, wobei die Bandzähne (22) außerhalb der Schlaufe und von den zu bindenden Kabeln weg positioniert sind;
eine lösbare Rastklinke, die an dem Band schwenkbar gestützt ist und die wenigstens einen Rastklinken-Rastzahn (58) aufweist, der komplementär zu den Bandzähnen (22) ist und der in die Öffnung verläuft und dafür ausgelegt ist, mit wenigstens einem Bandzahn (22) in Eingriff zu gelangen, um eine Bewegung des Bands (20) in einer Löserichtung zu verhindern;
ein von der lösbaren Rastklinke in Richtung eines zweiten Endes des Rastkopfs (30) verlaufendes Druckstück (34), wobei das Druckstück (34) für einen Benutzer leicht zugänglich ist und dafür konfiguriert ist, durch einen Daumen des Benutzers niedergedrückt zu werden, wobei das Druckstück (34) um eine Schwenklinie an der lösbaren Rastklinke ausgelenkt ist, wenn es niedergedrückt ist, um den wenigstens einen Rastzahn (58) aus dem Eingriff mit dem wenigstens einen Bandzahn (22) zu lösen, um zu ermöglichen, dass das Band (20) in der Löserichtung bewegt wird; und
eine Rückplatte (48), die von der Öffnung (12) in Richtung des zweiten Endes des Rastkopfs verläuft, wobei die Rückplatte (48) unter dem Druckstück (34) positioniert ist, wobei die Rückplatte (48) für den Benutzer leicht zugänglich ist und dafür konfiguriert ist, für einen Zeigefinger des Benutzers eine Unterstützung bereitzustellen, wobei das Druckstück (34) und die Rückplatte (48) in einer Richtung von der Schlaufe weg im Wesentlichen senkrecht zu dem Band (20) verlaufen, wenn das Band in der Öffnung (12) ist, **dadurch gekennzeichnet, dass** das Druckstück (34) an seinem fernen Ende einen geriffelten Streifen (36) enthält.

2. Lösbarer Kabelbinder nach Anspruch 1, wobei der wenigstens eine Rastklinken-Rastzahn (58) auf einer Seite der Öffnung (12) ist, der der Bandzahn (22) zugewandt ist, wenn er durch die Öffnung (12) geht, wobei der wenigstens eine Rastklinken-Rastzahn (58) durch Bewegung des Druckstücks (34) direkt betätigt wird, um den wenigstens einen Rastklinken-Rastzahn (58) eine ausreichende Strecke aus dem Rasteingriff mit dem wenigstens einen Bandzahn (22) zu bewegen, um die Bewegung des Bands (20) in der Löserichtung zu ermöglichen.

3. Lösbarer Kabelbinder nach Anspruch 1, wobei das Druckstück (34) eine Breite von wenigstens 90 % der Breite des Bands (20) aufweist.

4. Lösbarer Kabelbinder nach Anspruch 3, wobei die Rückplatte (48) eine Breite und eine Länge wenigstens so breit und lang wie das Druckstück (34) aufweist.

5. Lösbarer Kabelbinder nach Anspruch 1, wobei der wenigstens eine Rastklinken-Rastzahn (58) an einem Ende der lösbaren Rastklinke positioniert ist und das Druckstück (34) an einem gegenüberliegenden Ende der lösbaren Rastklinke positioniert ist, wobei die lösbare Rastklinke ferner einen Drehpunkt (62) enthält, der die lösbare Rastklinke stützt, wodurch der Druck an einem Ende des Druckstücks (34) die lösbare Rastklinke um den Drehpunkt (62) schwenkt und den wenigstens einen Rastklinken-Rastzahn (58) aus dem Eingriff mit dem wenigstens einen Bandzahn (22) befreit.

6. Lösbarer Kabelbinder nach Anspruch 5, wobei der Drehpunkt (62) unter dem wenigstens einen Rastklinken-Rastzahn (58) positioniert ist.

7. Lösbarer Kabelbinder nach Anspruch 6, wobei der Rastkopf (30) ferner Seitenwände (44) enthält, die die lösbare Rastklinke verstärken und die dafür konstruiert und ausgelegt sind, den Drehpunkt (62) und die Schwenklinie für die lösbare Rastklinke zu definieren.

8. Verfahren zum Bündeln und Sichern elektrischer Kabel, wobei das Verfahren umfasst:
Bereitstellen eines geformten einteiligen langgestreckten planaren Kunststoffbands (20) mit mehreren Bandzähnen (22), die auf einer Seite des Bands gebildet sind, und mit einem wiederverwendbaren Rastkopf (30), der an einem Ende (14) des Bands gebildet ist;
Einführen eines gegenüberliegenden Endes (16) des Bands (20) in eine Öffnung (12) in dem Rastkopf (30) in einer Einrastrichtung und Bilden einer Schlaufe zum Aufnehmen zu bindender Kabel, wobei die mehreren Bandzähne (22) außerhalb der Schlaufe und von den zu bindenden Kabeln weg positioniert sind und wobei der Rastkopf (30) in einer Richtung von der Schlaufe weg im Wesentlichen senkrecht zu dem Band (20) verläuft;
Einrasten des Bands (20) in dem Rastkopf (30) durch Eingreifen wenigstens eines in einer lösbaren Rastklinke des Rastkopfs (30) gebildeten Rastzahns (58), der komplementär zu den Bandzähnen (22) ist und in die Öffnung (12) verläuft, mit wenigstens einem Bandzahn (22) um die Bewegung des Bands (20) in einer Löserichtung zu verhindern;
Lösen des eingerasteten Bands durch Aktivieren der lösbaren Rastklinke an dem Rastkopf (30) durch Niederdrücken eines von der lösbaren Rastklinke weg von der Öffnung (12) verlaufenden Druckstücks (34), das für den Benutzer leicht zugänglich ist und das an einem fernen Ende davon einen geriffelten Streifen enthält, mit einem ersten Finger, wobei die lösbare Rastklinke von dem Band (20) weg verläuft, wenn das Band (20) in der Öffnung (12) ist, wobei die lösbare Rastklinke an dem Band schwenkbar gestützt ist und um eine Schwenklinie an dem Rastkopf (30) ausgelenkt wird, um den Rastzahn (58) aus dem Eingriff mit dem wenigstens einen Bandzahn (22) zu lösen, um zu ermöglichen, dass das Band (20) in einer Löserichtung bewegt wird; und
Entfernen des Bands (20) von dem Rastkopf (30) durch Anordnen eines zweiten Fingers auf einer Rückplatte (48), die unter dem Druckstück (34) positioniert ist, während das Druckstück (34) durch den ersten Finger in der Weise niedergedrückt ist, dass die lösbare Rastklinke zwischen dem ersten und dem zweiten Finger gesichert ist, und Ziehen der lösbaren Rastklinke in einer Richtung von der Schlaufe weg.

9. Verfahren zum Bündeln und Sichern elektrischer Kabel nach Anspruch 8, wobei der wenigstens eine Rastklinken-Rastzahn (58) auf einer Seite der Öffnung (12) ist, der der Bandzahn (22) zugewandt ist, wenn er durch die Öffnung (12) geht, wobei der wenigstens eine Rastklinken-Rastzahn (58) durch Bewegung des Druckstücks (34) direkt betätigt wird, um den wenigstens einen Rastklinken-Rastzahn (58) eine ausreichende Strecke aus dem Rasteingriff mit dem wenigstens einen Bandzahn (22) zu bewegen, um die Bewegung des Bands (20) in der Löserichtung zu ermöglichen.

10. Verfahren zum Bündeln und Sichern elektrischer Kabel nach Anspruch 8, wobei das Druckstück (34) eine Breite von wenigstens 90 % der Breite des Bands aufweist.

11. Verfahren zum Bündeln und Sichern elektrischer Kabel nach Anspruch 10, wobei die Rückplatte (48) eine Breite und eine Länge wenigstens so lang und breit wie das Druckstück (34) aufweist.

12. Verfahren zum Bündeln und Sichern elektrischer Kabel nach Anspruch 8, wobei das Druckstück (34) eine Breite von wenigstens 95 % einer Breite des Bands (20) aufweist.

13. Verfahren zum Bündeln und Sichern elektrischer Kabel nach Anspruch 8, wobei der wenigstens eine Rastklinken-Rastzahn (58) an einem Ende der lösbaren Rastklinke positioniert ist und das Druckstück (34) an einem gegenüberliegenden Ende der lösbaren Rastklinke positioniert ist, wobei die lösbare Rastklinke ferner einen Drehpunkt (62) enthält, der die lösbare Rastklinke stützt und der unter dem wenigstens einen Rastklinken-Rastzahn (58) positioniert ist, wodurch Druck auf ein Ende des Druckstücks (34) die lösbare Rastklinke um den Drehpunkt (62) schwenkt und den wenigstens einen Rastklinken-Rastzahn (58) aus dem Eingriff mit dem wenigstens einen Bandzahn (22) befreit.

14. Verfahren zum Bündeln und Sichern elektrischer Kabel nach Anspruch 13, wobei der Rastkopf (30) ferner Seitenwände (44) enthält, die dafür konstruiert und ausgelegt sind, den Drehpunkt (62) und die Schwenklinie für die lösbare Rastklinke zu definieren und zu verstärken.

## Revendications

1. Serre-câble détachable, comprenant :
une sangle planaire allongée en thermoplastique moulé d'une seule pièce (20), ladite sangle (20) comprenant plusieurs dents de sangle (22) formées sur un côté de ladite sangle ; et
une tête de verrouillage (30) formée à une extrémité de ladite sangle (20) et formée intégralement avec ladite sangle (20), ladite tête de verrouillage (30) étant réutilisable et comprenant
une ouverture (12) à travers une première extrémité de ladite tête de verrouillage (30) adjacente à l'une des extrémités (14) de la sangle, ladite ouverture (12) étant destinée à recevoir une extrémité opposée (16) de ladite sangle (20), ladite extrémité opposée (16) pouvant être insérée dans ladite ouverture (12) dans une direction de verrouillage et formant une boucle pour recevoir des câbles à lier, lesdites dents de sangle (22) étant positionnées à l'extérieur de la boucle et éloignées des câbles à lier ;
un verrou libérable pivotant sur la sangle et comportant au moins une dent de verrouillage (58) complémentaire auxdites dents de sangle (22), s'étendant dans ladite ouverture et adaptée pour s'engager dans au moins une dent de sangle (22) afin d'empêcher le mouvement de ladite sangle (20) dans le sens de la libération ;
un tampon (34) s'étendant depuis ledit verrou libérable vers une seconde extrémité de ladite tête de verrouillage (30), ledit tampon (34) étant facilement accessible par un utilisateur et configuré pour être enfoncé par le pouce de l'utilisateur, ledit tampon (34) étant dévié autour d'une ligne de pivotement sur ledit verrou libérable lorsqu'il est enfoncé pour libérer l'au moins une dent de verrouillage (58) de l'engagement avec l'au moins une dent de sangle (22) afin de permettre à la sangle (20) d'être déplacée dans le sens de la libération ; et
une plaque arrière (48) s'étendant de l'ouverture (12) vers la deuxième extrémité de ladite tête de verrouillage, la plaque arrière (48) étant positionnée sous ledit tampon (34), ladite plaque arrière (48) étant facilement accessible par l'utilisateur et configurée pour fournir un support à un index de l'utilisateur, ledit tampon (34) et ladite plaque arrière (48) s'étendant sensiblement perpendiculairement à ladite sangle (20) dans une direction opposée à la boucle lorsque ladite sangle est dans ladite ouverture (12), **caractérisé en ce que** ledit tampon (34) comprend une bande ondulée (36) à l'extrémité de celui-ci.

2. Le serre-câble détachable selon la revendication 1, dans lequel ladite au moins une dent de verrouillage (58) se trouve sur un côté de l'ouverture (12) auquel les dents de sangle (22) font face lorsqu'elles traversent l'ouverture (12), dans laquelle ladite au moins une dent de verrouillage (58) est directement actionnée par le mouvement dudit tampon (34) de manière à déplacer ladite au moins une dent de verrouillage (58) de l'engagement de verrouillage avec ladite au moins une dent de sangle (22) d'une distance suffisante pour permettre le mouvement de ladite sangle (20) dans le sens de la libération.

3. Le serre-câble détachable selon la revendication 1, dans lequel ledit tampon (34) a une largeur au moins égale à 90 % de la largeur de la sangle (20).

4. Le serre-câble détachable selon la revendication 3, dans lequel la plaque arrière (48) a une largeur et une longueur au moins égales à celles du tampon (34).

5. Le serre-câble détachable selon la revendication 1, dans lequel au moins une dent de verrouillage (58) est positionnée à une extrémité du verrou libérable et le tampon (34) est positionné à une extrémité opposée du verrou libérable, dans lequel le verrou libérable comprend en outre un point d'appui (62) soutenant le verrou libérable, une pression sur une extrémité du tampon (34) faisant pivoter le verrou libérable autour du point d'appui (62) et libérant l'au moins une dent de verrouillage (58) de l'engagement avec l'au moins une dent de sangle (22).

6. Le serre-câble détachable selon la revendication 5, dans lequel le point d'appui (62) est positionné en dessous de l'au moins une dent de verrouillage (58).

7. Le serre-câble détachable selon la revendication 6, dans lequel la tête de verrouillage (30) comprend en outre des parois latérales (44) renforçant le verrou libérable et construites et agencées pour définir le point d'appui (62) et la ligne de pivotement pour le verrou libérable.

8. Procédé d'attache et de fixation de câbles électriques, comprenant :
la fourniture d'une sangle planaire allongée en plastique moulé d'une seule pièce (20) comprenant plusieurs dents de sangle (22) formées sur un côté de ladite sangle et une tête de verrouillage (30) réutilisable, formée sur une extrémité (14) de ladite sangle ;
l'insertion d'une extrémité opposée (16) de ladite sangle (20) dans une ouverture (12) de ladite tête de verrouillage (30) dans une direction de verrouillage et formant une boucle pour recevoir les câbles à lier, les plusieurs de dents de sangle (22) étant positionnées à l'extérieur de la boucle et éloignées des câbles à lier et ladite tête de verrouillage (30) s'étendant sensiblement perpendiculairement à ladite sangle (20) dans une direction éloignée de la boucle ;
le verrouillage de ladite sangle (20) dans ladite tête de verrouillage (30) par l'engagement d'au moins une dent de verrouillage (58) formée dans un verrou libérable de ladite tête de verrouillage (30) complémentaire auxdites dents de sangle (22) et s'étendant dans ladite ouverture (12) avec au moins une dent de sangle (22) afin d'empêcher le mouvement de ladite sangle (20) dans un sens de libération ;
la libération de ladite sangle verrouillée par l'activation du verrou libérable sur ladite tête de verrouillage (30) en appuyant avec un premier doigt sur un tampon (34) s'étendant dudit verrou libérable éloigné de l'ouverture (12) facilement accessible par l'utilisateur et comprenant une bande ondulée à une extrémité de celui-ci, ledit verrou libérable s'éloignant de ladite sangle (20) lorsque ladite sangle (20) est dans ladite ouverture (12), ledit verrou libérable étant pivotant sur ladite sangle et dévié autour d'une ligne de pivotement sur la tête de verrouillage (30) pour libérer la dent de verrouillage (58) de l'engagement avec au moins une dent de sangle (22) afin de permettre à la sangle (20) d'être déplacée dans le sens de la libération ; et
le retrait de ladite sangle (20) de ladite tête de verrouillage (30) en plaçant un second doigt sur une plaque arrière (48) positionnée sous le tampon (34) pendant que le tampon (34) est enfoncé par le premier doigt de manière à fixer le verrou libérable entre le premier et le second doigt et en tirant le verrou libérable dans une direction opposée à la boucle.

9. Le procédé d'attache et de fixation de câbles électriques selon la revendication 8, dans lequel ladite au moins une dent de verrouillage (58) se trouve sur un côté de l'ouverture (12) auquel les dents de sangle (22) font face lorsqu'elles traversent l'ouverture (12), dans laquelle ladite au moins une dent de verrouillage (58) est directement actionnée par le mouvement dudit tampon (34) de manière à déplacer ladite au moins une dent de verrouillage (58) de l'engagement de verrouillage avec ladite au moins une dent de sangle (22) d'une distance suffisante pour permettre le mouvement de ladite sangle (20) dans le sens de la libération.

10. Le procédé d'attache et de fixation de câbles électriques selon la revendication 8, dans lequel ledit tampon (34) a une largeur au moins égale à 90 % de la largeur de la sangle.

11. Le procédé d'attache et de fixation de câbles électriques selon la revendication 10, dans lequel ladite plaque arrière (48) a une largeur et une longueur au moins égales à celles de ladite plaque (34).

12. Le procédé d'attache et de fixation de câbles électriques selon la revendication 8, dans lequel ledit tampon (34) a une largeur au moins égale à 95 % de la largeur de la sangle (20).

13. Le procédé d'attache et de fixation de câbles électriques selon la revendication 8, dans lequel au moins une dent de verrouillage (58) est positionnée à une extrémité du verrou libérable et le tampon (34) est positionné à une extrémité opposée du verrou libérable, dans lequel le verrou libérable comprend en outre un point d'appui (62) soutenant le verrou libérable et positionné sous l'au moins une dent de verrouillage (58), de façon à ce qu'une pression sur une extrémité du tampon (34) fasse pivoter le verrou libérable autour du point d'appui (62) et libère l'au moins une dent de verrouillage (58) de l'engagement avec l'au moins une dent de sangle (22).

14. Le procédé d'attache et de fixation de câbles électriques selon la revendication 13, dans lequel la tête de verrouillage (30) comprend en outre des parois latérales (44) construites et disposées de manière à définir et à renforcer le point d'appui (62) et ladite ligne de pivotement pour le verrou libérable.
